# EUROPEAN PATENT SPECIFICATION

(11) **EP 3 405 703 B1**
(45) Date of publication and mention of the grant of the patent: **11.09.2019**
(21) Application number: 16702310.0
(22) Date of filing: 19.01.2016
(51) Int. Cl.: F16H 61/22

(54) **SHIFTER ASSEMBLY FOR A VEHICLE AND A METHOD OF OPERATING THE SAME**
SCHALTANORDNUNG FÜR EIN FAHRZEUG UND VERFAHREN ZUM BETRIEB DAVON
ENSEMBLE DE CHANGEMENT DE VITESSE POUR VÉHICULE ET PROCÉDÉ POUR L'UTILISER

(43) Date of publication of application: 28.11.2018
(73) Proprietor: Kongsberg Driveline Systems I, Inc., Novi, MI 48377 (US)
(72) Inventor: LOVE, Jonathan, Warner, Waterford MI 48327 (US)
(74) Representative: Uexküll & Stolberg
(86) International application number: PCT/US2016/013900
(87) International publication number: WO 2017/127052

(56) References cited:
- WO-A1-01/92764
- DE-U1- 9 305 846
- JP-A- H01 106 754
- US-A- 5 993 353

## Description

### BACKGROUND OF THE INVENTION

### 1. Field of the Invention

The subject invention relates to a shifter assembly for a vehicle and a corresponding method.

### 2. Description of Related Art

There is a desire within the automotive industry to prevent inadvertent movement from a certain state of a transmission. Commonly, there is a desire to maintain the transmission in a park state to prevent inadvertent movement of the vehicle when the vehicle is parked and to maintain the transmission in a neutral state to prevent inadvertent selection of a drive gear of a transmission, such as when the vehicle is towed. Different shifter assemblies have been developed which have a shift lever that is selectively retained in positions corresponding with the park and neutral states. One of the shifter assemblies uses two lever arms independently selectively engaging two detents. The engagement of one of the lever arms with one of the detents retains the shift lever in a position corresponding with the park state and the engagement of the other one of the lever arms with the other one of the detents retains the shift lever in a position corresponding with the neutral state. A first solenoid actuates the first lever arm and a second solenoid actuates the second lever arm to selectively engage the detents.

Although effective, shifter assemblies having the pair of solenoids, the pair of lever arms, and the pair of detents are complex and require more voluminous packaging to house the components. Furthermore, the cost of producing the shifter assembly is greater because the shifter assembly requires duplicate components. As such, there remains a need to provide an improved shifter assembly and an improved method of using a shifter assembly.

DE 93 05 846 U1 discloses a sifter assembly comprising the features of the preamble of claim 1.

### SUMMARY OF THE INVENTION AND ADVANTAGES

A shifter assembly according to the present invention comprises the features of claim 1 A method of selectively preventing movement from each of at least two states of a transmission for a vehicle using a shifter assemble according to the present invention comprises the features of claim 11.

Preferred embodiments of the invention are set out in the dependent claims.

The subject invention provides a shifter assembly for selecting one of at least two states of a transmission for a vehicle. The shifter assembly includes a housing having a first detent track defining at least a first channel. The shifter assembly further includes a shift lever coupled to and movable relative to the housing between at least a first lever position and a second lever position spaced from the first lever position for selecting each of the at least two states of the transmission.

The shifter assembly further includes a first detent pin coupled to and selectively moveable relative to the shift lever between a locked position and an unlocked position. The first detent pin is disposed within the first channel when the shift lever is in the first lever position and the first detent pin is in the locked position and the first detent pin is spaced from the first channel when the first detent pin is in the unlocked position to permit movement of the shift lever between the first and second lever positions.

The shifter assembly further includes a second detent track coupled to and movable with the shift lever between the first and second lever positions with the second detent track defining a second channel, and a locking member coupled to and moveable relative to the housing between a first position and a second position. A portion of the locking member is aligned with the first detent pin when the shift lever is in the first lever position, the first detent pin is in the locked position, and the locking member is in the first position to retain the first detent pin in the locked position within the first channel and retain the shift lever in the first lever position. The locking member has a second detent pin disposed within the second channel when the shift lever is in the second lever position and the locking member is in the second position to retain the shift lever in the second lever position.

The subject invention also provides a method of selectively preventing movement from each of at least two states of a transmission for a vehicle using a shifter assembly. The shifter assembly includes a housing having a first detent track defining at least a first channel, a shift lever coupled to and movable relative to the housing, a first detent pin coupled to and selectively moveable relative to the shift lever, a second detent track coupled to and movable with the shift lever with the track defining a second channel, and a locking member coupled to and moveable relative to the housing and having a second detent pin.

The method includes the steps of disposing the first detent pin in the first channel when the first detent pin is in a locked position and the shift lever is in a first lever position for selecting one of the at least two states of the transmission and aligning a portion of the locking member with the first detent pin when the locking member is in a first position to retain the first detent pin in the locked position within the first channel and retain the shift lever in the first lever position.

The method further includes the steps of moving the locking member from the first position to a second position to space the portion of the locking member from the first channel and moving the first detent pin from the locked position to an unlocked position outside of the first channel.

The method further includes the steps of moving the shift lever and the second detent track from the first lever position to a second lever position for selecting the other one of the at least two states of the transmission and disposing the second detent pin of the locking member in the second channel to retain the shift lever in the second lever position.

Accordingly, the shifter assembly provides the selective retention of the shift lever in the first and second lever positions corresponding with the two states of the transmission through a unitary component (i.e., the locking member). The use of the locking member reduces the number of moving components required to retain the shift lever in the first and second lever positions which reduces the complexity of the shifter assembly and reduces the cost to produce the shifter assembly.

### BRIEF DESCRIPTION OF THE DRAWINGS

Advantages of the subject invention will be readily appreciated as the same becomes better understood by reference to the following detailed description when considered in connection with the accompanying drawings.
Figure 1 is a perspective view of a shifter assembly.
Figure 2 is a perspective view of the shifter assembly showing a shift lever, first and second detent tracks, a first detent pin, a locking member having a second detent pin, and a housing shown in phantom.
Figure 3 is a side elevational view of the shifter assembly shown in Figure 2 with the shift lever in a first lever position, the first detent pin in a locked position, and the locking member in a first position.
Figure 4 is a side elevational view of the shifter assembly shown in Figure 2 with the shift lever in the first lever position, the first detent pin in an unlocked position, and the locking member in a second position.
Figure 5 is a side elevational view of the shifter assembly shown in Figure 2 with the shift lever in a second lever position, the first detent pin in the locked position, and the locking member in the second position.
Figure 6 is a perspective view of a shifter assembly showing the shift lever, the first detent track, the first detent pin, the locking member having the second detent pin, the housing shown in phantom, and another embodiment of the second detent track.
Figure 7 is a side elevational view of the shifter assembly shown in Figure 6 with the shift lever in the first lever position, the first detent pin in the locked position, and the locking member in the first position.
Figure 8 is a side elevational view of the shifter assembly shown in Figure 6 with the shift lever in the first lever position, the first detent pin in the unlocked position, and the locking member in a third position.
Figure 9 is a side elevational view of the shifter assembly shown in Figure 6 with the shift lever in the second lever position, the first detent pin in the locked position, and the locking member in a second position.
Figure 10 a rear elevational view illustrative of both the shifter assembly shown in Figure 2 and the shifter assembly shown in Figure 6.

### DETAILED DESCRIPTION OF THE INVENTION

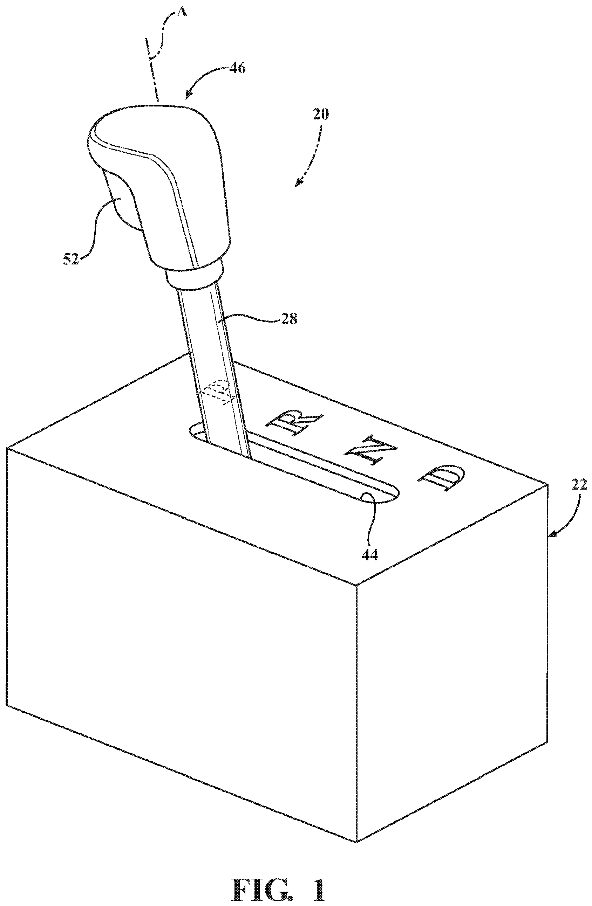

Referring to the Figures, wherein like numerals indicate like or corresponding parts throughout the several views, a shifter assembly 20 for selecting one of at least two states of a transmission for a vehicle is generally shown in Figure 1. Generally, the shifter assembly 20 is used in shift-by-wire operation to electrically signal which of one of the states of the transmission for the vehicle should be selected. However, it is to be appreciated that communication between the shifter assembly 20 and the transmission can be through any suitable mechanical components, including but not limited to rods, pulleys, cables, and the like. It is also to be appreciated that the shifter assembly 20 as illustrated is schematic in nature and various components have been eliminated or generalized.

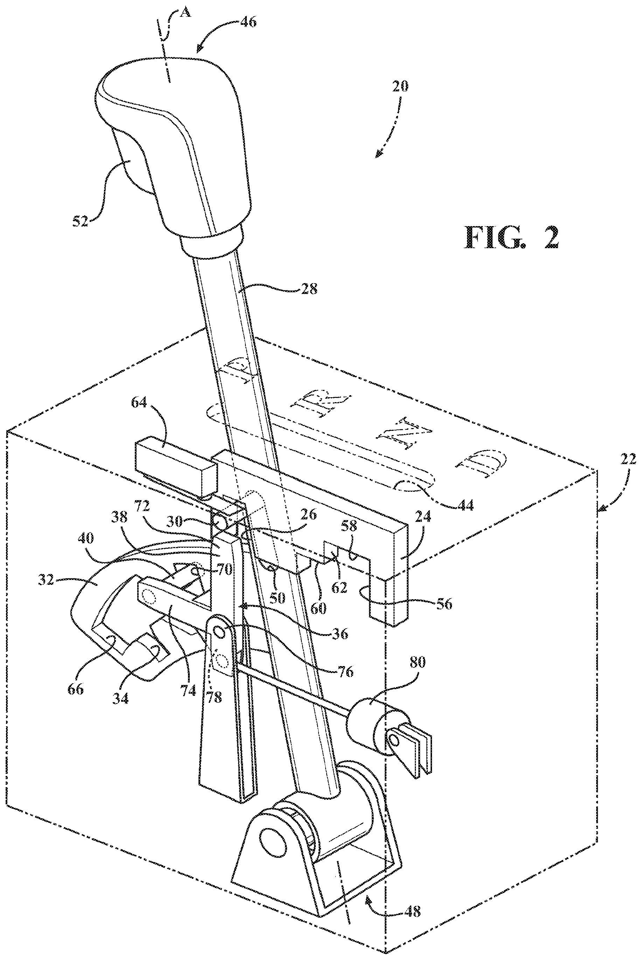

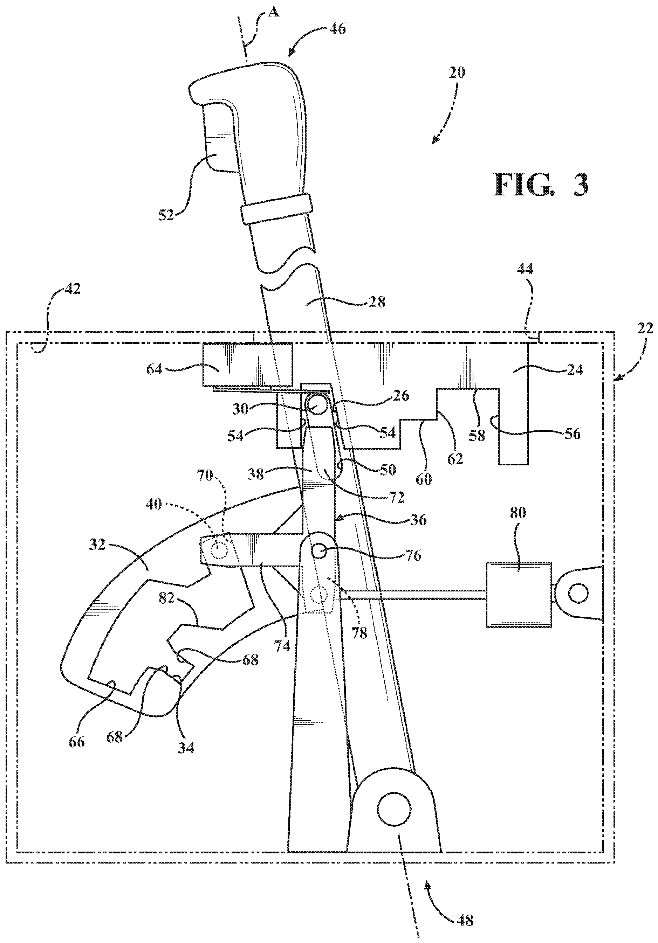

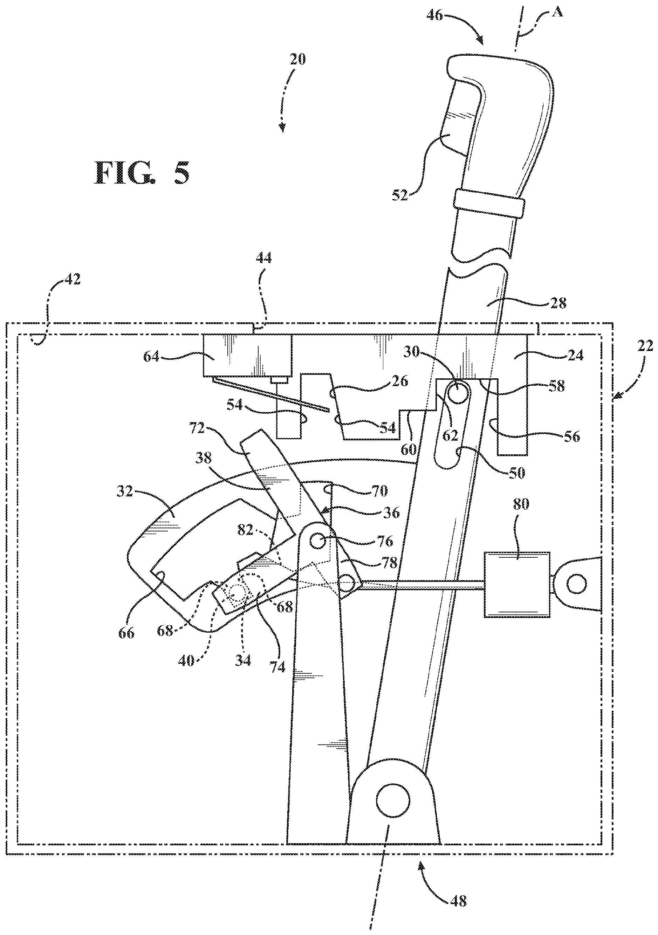

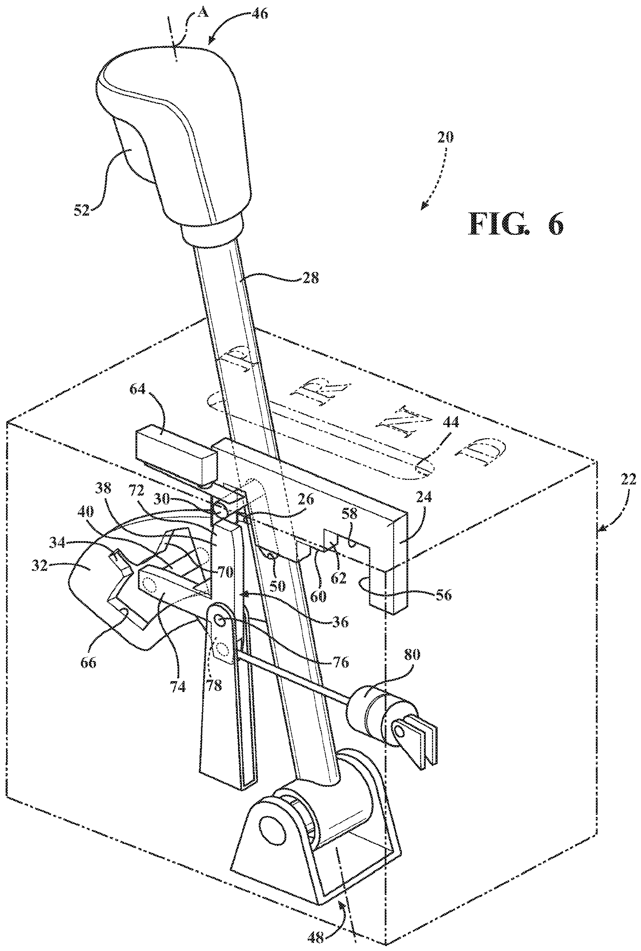

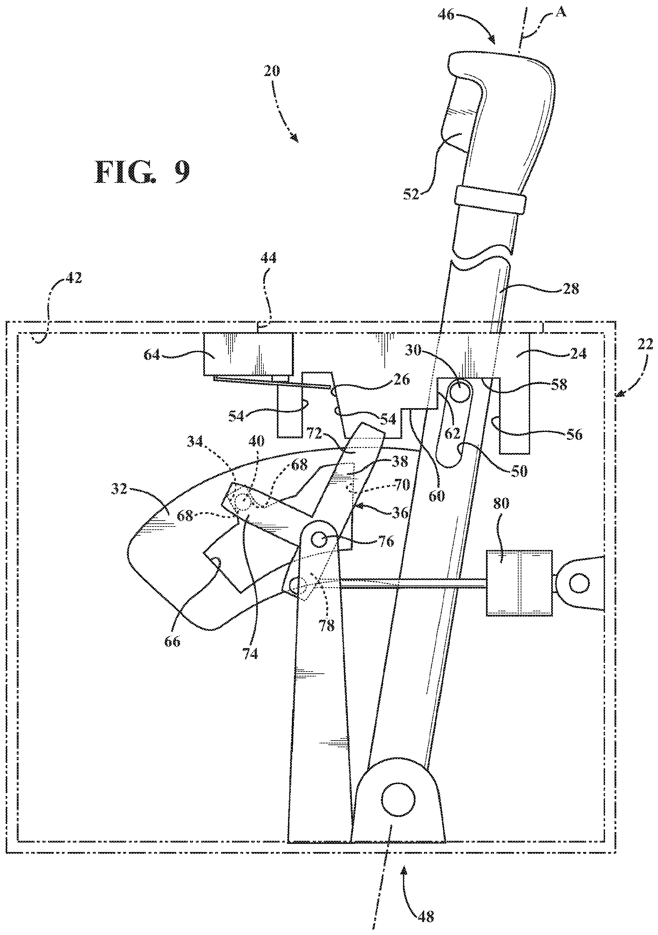

As shown in Figures 2 and 6, the shifter assembly 20 includes a housing 22 having a first detent track 24 defining at least a first channel 26. The shifter assembly 20 further includes a shift lever 28 coupled to and movable relative to the housing 22 between at least a first lever position (shown in Figures 3, 4, 7, and 8) and a second lever position (shown in Figures 5 and 9) spaced from the first lever position for selecting each of the at least two states of the transmission.

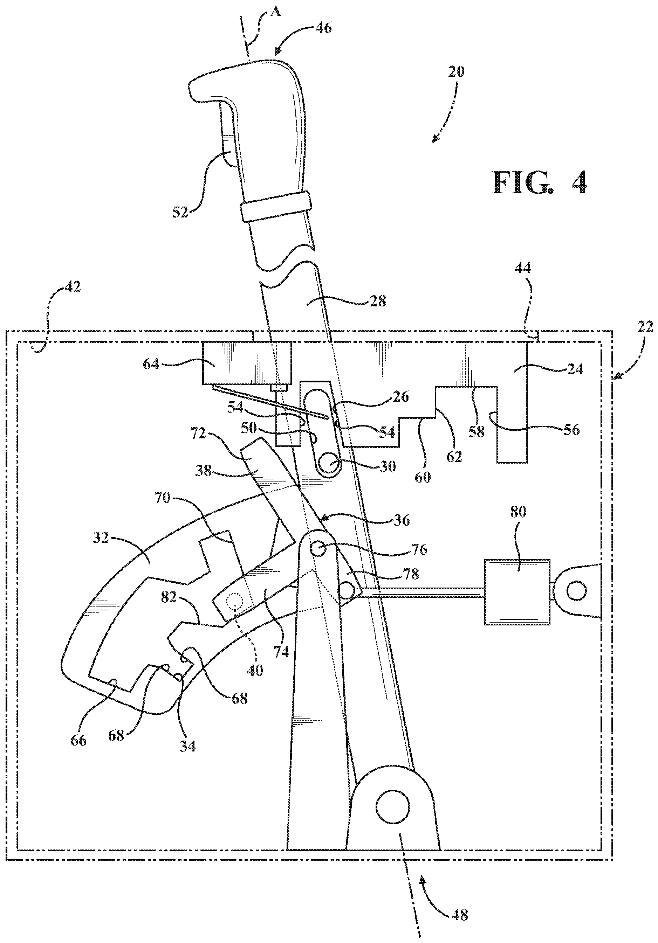

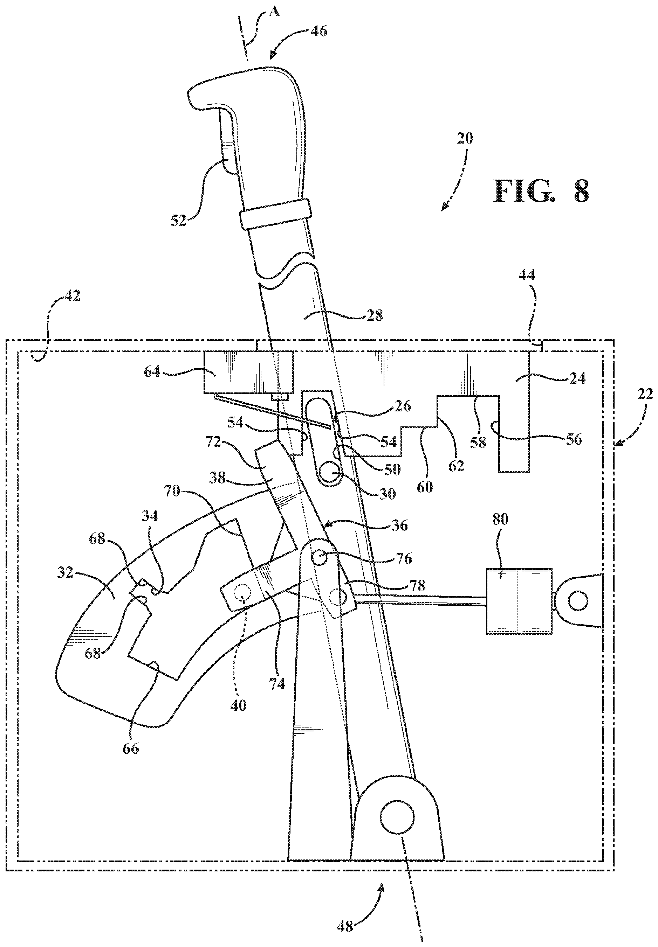

The shifter assembly 20 further includes a first detent pin 30 coupled to and selectively moveable relative to the shift lever 28 between a locked position (shown in Figures 3, 5, 7, and 9) and an unlocked position (shown in Figures 4 and 8). The first detent pin 30 is disposed within the first channel 26 when the shift lever 28 is in the first lever position and the first detent pin 30 is in the locked position, and the first detent pin 30 is spaced from the first channel 26 when the first detent pin 30 is in the unlocked position to permit movement of the shift lever 28 between the first and second lever positions.

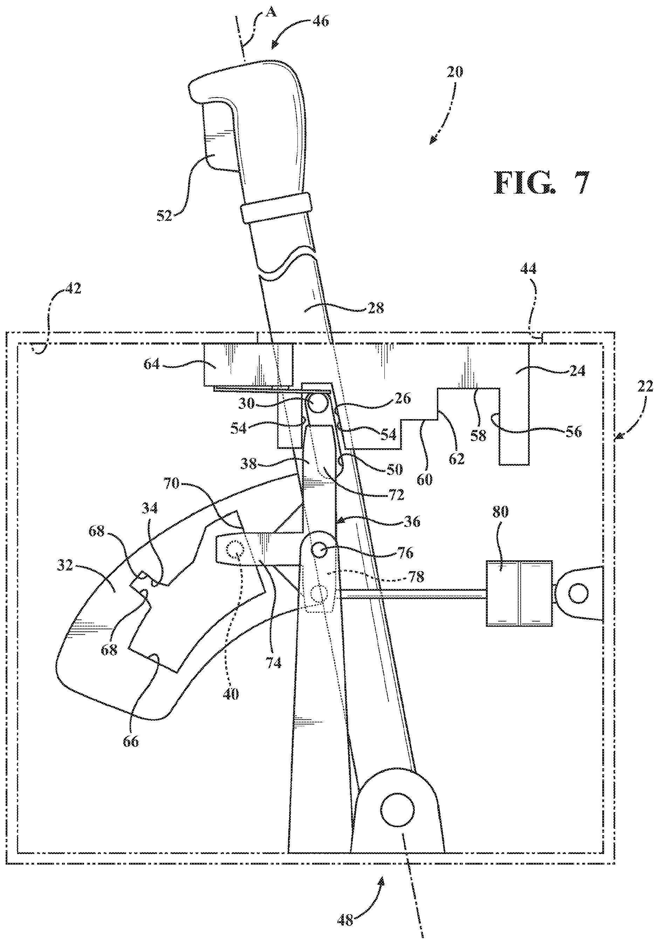

The shifter assembly 20 further includes a second detent track 32 coupled to and movable with the shift lever 28 between the first and second lever positions with the second detent track 32 defining a second channel 34, and a locking member 36 coupled to and moveable relative to the housing 22 between a first position (shown in Figures 3 and 7) and a second position (shown in Figures 4, 5, and 9). A portion 38 of the locking member 36 is aligned with the first detent pin 30 when the shift lever 28 is in the first lever position, the first detent pin 30 is in the locked position, and the locking member 36 is in the first position to retain the first detent pin 30 in the locked position within the first channel 26 and retain the shift lever 28 in the first lever position. The locking member 36 has a second detent pin 40 disposed within the second channel 34 when the shift lever 28 is in the second lever position and the locking member 36 is in the second position to retain the shift lever 28 in the second lever position. Said differently, the locking member 36 selectively locks the shifter assembly 20 in each of the first and second lever positions to prevent inadvertent movement of the shift lever 28 from each of the first and second lever positions.

As shown in the Figures, the housing 22 is substantially cubical. This is for exemplary purposes. It is to be appreciated that the housing 22 may be any size, shape, and configuration. As shown in Figures 1, 2, and 6, the housing 22 may define an interior 42 and a shift pattern 44 opening into the interior 42. The shift pattern 44 may have a substantially linear configuration. It is to be appreciated that the shift pattern 44 may have any suitable configuration, including, but not limited to, an "H-shaped" configuration having two parallel portions and a transverse portion between the parallel portions.

As shown in Figures 2-10, the shift lever 28 may extend through the shift pattern 44 along a longitudinal axis A between a first end 46 and a second end 48. The second end 48 of the shift lever 28 may be coupled to the housing 22 within the interior 42, with the shift lever 28 extending through the shift pattern 44 to dispose the first end 46 outside of the housing 22. The shift pattern 44 allows movement of the shift lever 28 between at least the first and second lever positions.

As shown in Figures 2-9, the shift lever 28 may be pivotally coupled to the housing 22 with the shift lever 28 pivoting between the first and second lever positions. More specifically, the shift lever 28 may be pivotally coupled to the housing 22 within the interior 42. It is to be appreciated that the shift lever 28 may be configured to move in any suitable manner, including, but not limited to, rectilinear motion. Furthermore, the pivotal coupling of the shift lever 28 with the housing 22 shown in the Figures is schematic in nature. One having skill in the art will appreciate that the shift lever 28 may be pivotally coupled to the housing 22 in any suitable manner and configuration.

As shown in Figures 2 and 6, the shift lever 28 may define a bore along the longitudinal axis A. The shift lever 28 may further define a slot 50 opening into the bore and extending along the longitudinal axis A with the first detent pin 30 transverse to the longitudinal axis A and partially extending through the slot 50 into the bore. Said differently, the first detent pin 30 may be transverse to the longitudinal axis A and may move along the longitudinal axis A between the locked and unlocked positions. The shifter assembly 20 may further include a biasing member disposed within the bore. The biasing member may engage both the shift lever 28 and the first detent pin 30 to bias the first detent pin 30 toward the locked position. The shift lever 28 may have a button 52 coupled to the first detent pin 30 with the button 52 moving the first detent pin 30 to the unlocked position against the bias of the biasing member when the button 52 is depressed, as shown in Figures 4 and 8. It is to be appreciated that the configuration of the first detent pin 30 coupled to and movable relative to the shift lever 28 as shown in the Figures is schematic in nature. As such, the first detent pin 30 may be configured to be coupled to and move relative to the shift lever 28 in any suitable manner, including, but not limited to, the first detent pin 30 being axially aligned with the shift lever 28 and extending from the second end 48 of the shift lever 28 it what is commonly referred to in the art as a plunger configuration.

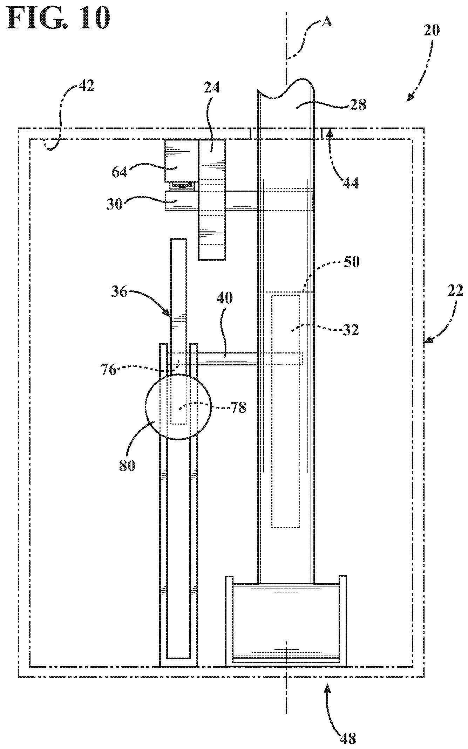

As shown in Figures 2-10, the first detent track 24 may extend into the interior 42 of the housing 22 adjacent the shift pattern 44. As shown in Figures 2 and 6, the first detent track 24 may extend substantially parallel to the shift pattern 44 having the substantially linear configuration. Moreover, as shown in Figure 10, the first detent track 24 may extend into the interior 42 substantially parallel to the shift lever 28. As described above, the first detent pin 30 may be transverse to the longitudinal axis A of the shift lever 28. As such, the first detent pin 30 may extend from the shift lever 28 to selectively engage the substantially parallel first detent track 24. It is to be appreciated that the first detent track 24 may be disposed anywhere within the interior 42 or along an exterior of the housing 22. Likewise, the first detent pin 30 may selectively engage the first detent track 24 in any suitable manner. Furthermore, the first detent track 24 may have any suitable size, shape, and configuration suitable for defining the first channel 26.

The location and orientation of the first detent track 24 shown in the Figures is schematic in nature. However, one having skill in the art will appreciate that the configuration of the first channel 26 and the engagement of the first detent pin 30 therein is specifically designed.

As described above, the first detent pin 30 may be selectively disposed within the first channel 26 of the first detent track 24 indicating the first lever position to a user. Said differently, the configuration of the first detent track 24 allowing disposition of the first detent pin 30 within the first channel 26 provides haptic feedback to the user indicating that the shift lever 28 is in the first shift position. It is to be appreciated that the first detent track 24 may be configured to indicate the second lever position to the user. Moreover, the shift lever 28 may be moveable between more than the first and second lever positions with the first detent track 24 configured to indicate any of the lever positions to the user. For example, as shown in the Figures, the shift lever 28 may be movable between four lever positions. The first lever position corresponds with a park state of the transmission and is shown in Figures 3, 4, 7, and 8. The second lever position corresponds with a neutral state of the transmission and is shown in Figures 5 and 9. The shift lever 28 further includes a lever position between the first and second lever positions corresponding to a reverse state of the transmission. The shift lever 28 further includes a lever position adjacent to the second lever position, and opposite the lever position defining the reverse state, which defines a drive state of the transmission. It is to be appreciated that the configuration of the first detent track 24 corresponding with the four lever positions is exemplary in purpose. It is to be appreciated that the shift lever 28 may be movable between any number of lever positions with the first detent track 24 configured to indicate any of the lever positions.

To facilitate the indication of the first lever position, the first detent track 24 may have a pair of first channel walls 54 spaced from one another and at least partially defining the first channel 26, with the first channel walls 54 transverse to the movement of the shift lever 28 to retain the first detent pin 30 in the first channel 26, as shown in Figures 3-5 and 7-9. More specifically, the transverse configuration of the first channel walls 54 causes the first detent pin 30 in the locked position to engage the first channel walls 54 when the user attempts to move the shift lever 28 from the first lever position. The closer the first channel walls 54 are to being perpendicular to the movement of the shift lever 28, the greater the resistance to moving the first detent pin 30 out of the first channel 26. The coupling of the first detent pin 30 with the shift lever 28 causes the engagement of the first detent pin 30 with the first channel walls 54 to resist movement of the shift lever 28 out of the first lever position. As such, the first channel walls 54 may partially retain the shift lever 28 in the first lever position as long as the first detent pin 30 is in the locked position.

The first detent pin 30 is spaced from the first channel 26 in the unlocked position, as shown in Figures 4, 5, 8, and 9. Said differently, the first detent pin 30 is outside of the first channel 26 such that the first detent pin 30 and spaced from the first channel walls 54 in the unlocked position. Moreover, the first detent pin 30 is spaced from the first detent track 24 in the unlocked position facilitating movement of the shift lever 28 from the first lever position.

As shown in Figures 3-5 and 7-9, the first detent track 24 may define a plurality of channels configured to indicate desired positions of the shift lever 28. For example, in the embodiment described above having the lever positions corresponding with the park, reverse, neutral, and drive states of the position, the first detent track 24 may define a secondary drive channel 56 corresponding with the lever positions corresponding with the reverse, neutral, and drive states. Said differently, the secondary drive channel 56 accepts the first detent pin 30 therein when the first detent pin 30 is in the locked position and the shift lever 28 is in the lever positions which correspond with the reverse, neutral, and drive states. The first detent track 24 may have a first surface 58 and a second surface 60 and a transverse surface 62 partially defining the secondary drive channel 56, with the first and second surfaces 58, 60 substantially parallel to one another and interconnected by the transverse surface 62 to define a staggered bottom of the secondary drive channel 56. The first surface 58 corresponds with the shift lever 28 in the lever positions corresponding with the neutral and drive states. The second surface 60 corresponds with the shift lever 28 in the lever position corresponding with the reverse state. The first surface 58 allows free movement of the shift lever 28 between the lever positions corresponding with the neutral and drive states. The first detent pin 30 engages the transverse surface 62 when the shift lever 28 attempts to move to the lever position corresponding with the reverse state. As such, the first detent pin 30 must move to the unlocked position before the shift lever 28 may move to the lever position corresponding with the reverse state. Because the first surface 58 is set further in to the first detent track 24 than the second surface 60, the shift lever 28 may move from the lever position corresponding to the reverse state to the lever positions corresponding with the neutral and drive states without depressing the button 52.

It is to be appreciated that the secondary drive channel 56 is described herein for exemplary purposes. It is to be appreciated that the first detent track 24 may define only the first channel 26 or any number of channels in any size, shape, and configuration.

As shown in Figures 2-10, the shifter assembly 20 may further include a sensor 64 adjacent the first detent track 24. The sensor 64 detects when the first detent pin 30 is disposed in the first channel 26 in the locked position which corresponds to the park state of the transmission. With the transmission in the park state, the vehicle allows the release of the vehicle key to the user.

As shown in Figures 3-5 and 7-9, the second detent track 32 is coupled to and movable with the shift lever 28. More specifically, the second detent track 32 may be fixed to and movable with the shift lever 28. Furthermore, the second detent track 32 may move with the shift lever 28 as the shift lever 28 pivots between at least the first and second lever positions. It is to be appreciated that the second detent track 32 may be coupled to and movable with the shift lever 28 in any suitable configuration. For example, as described above, the shift pattern 44 of the housing 22 may have the "H-shaped" configuration having two parallel portions and a transverse portion between the parallel portions. Such a configuration may be utilized in a manumatic transmission, where the user may select between transmission states including Park, Reverse, Neutral, and Drive along one of the parallel portions and between individual forward gears along the other parallel portion. In such a configuration, the second detent track 32 may be coupled to and movable with the shift lever 28 when the shift lever 28 is in the parallel portion of the shift pattern 44 corresponding with the Park, Reverse, Neutral, and Drive transmission states while the second detent track 32 may be decoupled from the shift lever 28 when the shift lever 28 is in the other parallel portion of the shift pattern to facilitate independent movement of the shift lever 28. More specifically, in such a configuration the shifter assembly 20 may include a carrier coupled to the housing 22 and pivotal between positions corresponding with transmission states including Park, Reverse, Neutral, and Drive. The shift lever 28 may pivot both with the carrier and transverse to the carrier, with the shift lever 28 coupled to and pivoting with the carrier when the shift lever 28 is in the parallel portion of the shift pattern 44 corresponding with the Park, Reverse, Neutral, and Drive transmission states. The shift lever 28 may be decoupled from and pivot independent of the carrier when the shift lever 28 is in the transverse portion or the other parallel portion of the shift pattern to facilitate independent movement of the shift lever 28.

The second detent track 32 may extend from the shift lever 28 transverse to the longitudinal axis A. Furthermore, the first and second detent tracks 24, 32 may be disposed on substantially parallel planes, as shown in Figure 10. It is to be appreciated that the second pin may be oriented relative to the shift lever 28 and the first detent track 24 in any suitable configuration.

The location and orientation of the second detent track 24 shown in the Figures is schematic in nature. However, one having skill in the art will appreciate that the configuration of the second channel 34 and the engagement of the second detent pin 40 therein is specifically designed.

As shown in Figures 3-5 and 7-9, the second detent track 32 may define an elongated void 66 with second channel 34 opening into the elongated void 66. The second detent pin 40 is movable between the second channel 34 when the locking member 36 is in the second position (as shown in Figures 5 and 9) and the elongated void 66 (as shown in Figures 4, 7, and 8). More specifically, the second detent pin 40 moves within the elongated void 66 as the shift lever 28 moves between the first and second lever positions. Furthermore, the second detent pin 40 moves within the elongated void 66 as the shift lever 28 moves between any number of lever positions. In the embodiment described above, the second detent pin 40 may be disposed in the second channel 34 when the shift lever 28 is in the second lever position, which corresponds with the neutral state of the transmission. It is to be appreciated that the second channel 34 may correspond with any lever position of the shift lever 28 and any state of the transmission.

As shown in Figures 3-5 and 7-9, the second detent track 32 may have a pair of second channel walls 68 spaced from one another and at least partially defining the second channel 34, with the second channel walls 68 transverse to the movement of the shift lever 28 to retain the second detent pin 40 of the locking member 36 within the second channel 34. More specifically, the transverse configuration of the second channel walls 68 causes the second detent pin 40 of the locking member 36 in the second position to engage the second channel walls 68 when the user attempts to move the shift lever 28 from the second lever position. The closer the second channel walls 68 are to being perpendicular to the movement of the shift lever 28, the greater the resistance to moving the second detent pin 40 out of the second channel 34. The coupling of the second detent pin 40 with the shift lever 28 causes the engagement of the second detent pin 40 with the second channel walls 68 to resist movement of the shift lever 28 out of the second lever position. The locking member 36 is coupled to the housing 22. As such, the second channel walls 68 may partially retain the shift lever 28 in the second lever position as long as the locking member 36 is in the second position.

The second detent track 32 may define a plurality of channels corresponding to desired positions of the shift lever 28. For example, the second detent track 32 may define a secondary park channel 70 corresponding with the lever position corresponding with the park state of the transmission. Said differently, the secondary park channel 70 accepts the second detent pin 40 therein when the second detent pin 40 is in the first position and the shift lever 28 is in the lever position corresponding with the park state, which may be first lever position. As such, the secondary park channel 70 retains the shift lever 28 in the lever position when the locking member 36 is in the first position.

In one embodiment, shown in Figures 2-5, the secondary park channel 70 is defined by the second detent track 32 on an opposing side of the elongated void 66. In another embodiment, shown in Figures 6-9, the secondary park channel 70 is defined by the second detent track 32 on the same side of the elongated void 66 spaced from the second channel 34. The movement of the second detent pin 40 into and out of each of the second channel 34 and the secondary park channel 70 will be described below.

The shift lever 28 and the locking member 36 may move independently of each other. Said differently, the locking member 36 may move between the first and second positions without the shift lever 28 simultaneously moving between at least the first and second lever positions, and the shift lever 28 may move between the at least first and second lever positions without the locking member 36 simultaneously moving between the first and second positions. Furthermore, the shift lever 28 may be spaced from the locking member 36 with the shift lever 28 and the locking member 36 moving in substantially parallel planes, as shown Figure 10. Likewise, the locking member 36 may be spaced from the first and second detent tracks 24, 32 with the locking member 36 and the first and second detent tracks 24, 32 disposed on substantially parallel planes. It is to be appreciated that the locking member 36 may be disposed in any suitable configuration relative to the shift lever 28 and the first and second detent tracks 24, 32.

The second detent pin 40 may be spaced from the second channel 34 when the first detent pin 30 is in the first channel 26, as shown in Figures 3 and 7. Likewise, the portion 38 of the locking member 36 may be spaced from the first channel 26 when the second detent is in the second channel 34, as shown in Figures 5 and 9. Said differently, the locking member 36 may facilitate selective retention of the shift lever 28 relative to the housing 22 exclusively through coupling with the first detent track 24 in the first lever position and exclusively through coupling with the second detent track 32 in the second lever position.

As shown in Figures 2-9, the locking member 36 may have a first section 72 and a second section 74 transverse to the first section 72, with the second section 74 having the second detent pin 40 and with the first section 72 having the portion 38 alignable with the first detent pin 30. The first and second sections 72, 74 may be substantially perpendicular to one another. It is to be appreciated that the first and second sections 72, 74 may be positioned at any suitable angle.

It is to be appreciated that the shape of the locking member 36 as described herein is schematic in nature. One having skill in the art will appreciate that the location and orientation of the first and second sections 72, 74 and their respective engagement with the first and second detent tracks 24, 32 as described herein are specifically designed.

The first and second sections 72, 74 may both have elongated configurations and extend to distal ends. As shown in Figures 3 and 7, the first section 72 of the locking member 36 may align longitudinally with the first detent pin 30 such that the distal end of the first section 72 faces the first detent pin 30 when the shift lever 28 is in the first lever position, the first detent pin 30 is in the locked position, and the locking member 36 is in the first position. More specifically, the first section 72 may have a width substantially equal to or greater than a width of the first channel 26 between the first channel walls 54. Furthermore, the first detent pin 30 may extend through the planes defined by the first detent track 24 and the locking member 36. As such, the distal end of the first section 72 blocks the first detent pin 30 from exiting the first channel 26 when the locking member 36 is in the first position. The distal end of the second section 74 may be spaced from the second channel 34 when the shift lever 28 is in the first lever position, the first detent pin 30 is in the locked position, and the locking member 36 is in the first position. As such, the shift lever 28 may be exclusively retained in the first lever position by the retention of the first detent pin 30 (which is coupled to the shift lever 28) within the first channel 26 of the first detent track 24 (which is fixed to the housing 22) by the alignment of the distal end of the first section 72 of the locking member 36 with the first channel 26.

As shown in Figures 5 and 9, the second detent pin 40 may extend from the distal end of the second section 74 transverse to the second section 74 and may be disposed within the second channel 34 when the shift lever 28 is in the second lever position and the locking member 36 is in the second position. The second detent pin 40 may extend through the planes defined by the locking member 36 and the second detent track 32. The first detent pin 30 may be spaced from the first channel 26 when the second detent pin 40 is disposed in the second channel 34 of the second detent track 32. As such, the shift lever 28 may be exclusively retained in the second lever position by the engagement of the second detent pin 40 (which is coupled to the housing 22) with the second detent track 32 in the second channel 34 (which is coupled to the shift lever 28).

As shown in Figures 2-9, each of the first and second sections 72, 74 may be integrally fixed to one another such that the first and second sections 72, 74 move as a unit. The locking member 36 may have a corner 76 with the first and second sections 72, 74 extending from the corner 76 to the distal ends and with the locking member 36 pivotally coupled to the housing 22 at the corner 76 such that the movement of the locking member 36 is further defined as pivoting of the locking member 36. As such, the locking member 36 and the shift lever 28 may pivot independently of one another on substantially parallel planes, as shown in Figure 10.

The locking member 36 may have a third section 78 integrally fixed with the first and second sections 72, 74 and receiving an input to move the locking member 36. As shown Figures 2-9, the third section 78 may extend from the corner 76 such that third section 78 provides leverage to pivot the locking member 36 relative to the housing 22 at the corner 76. Furthermore, the third section 78 may be aligned with the first section 72 and substantially perpendicular to the second section 74. It is to be appreciated that the third section 78 may be positioned anywhere relative to the first and second sections 72, 74 for receiving any input to move the locking member 36 in any manner.

The shifter assembly 20 may further include an actuator 80 coupled to the locking member 36, with the actuator 80 effectuating the movement of the locking member 36 between the first and second positions. More specifically, the actuator 80 may be coupled to the third section 78. The actuator 80 may pivot the locking member 36 relative to the housing 22 at the corner 76 through the connection of the actuator 80 with the third section 78. The actuator 80 may be coupled to the housing 22. As such, the actuator 80 may include an interlock which fixes the locking member 36 relative to the housing 22 in each of the first and second positions. Alternatively, the actuator 80 may provide a bias toward either of the selected first and second positions for retaining the alignment of the portion 38 of the locking member 36 with the first channel 26 or the disposition of the second detent pin 40 with the second channel 34. The actuator 80 may be a solenoid capable of receiving an electrical signal which results in alternation in the length of the solenoid. It is to be appreciated that the actuator 80 may be any device which effectuates the movement of the locking member 36.

As described above, much of the shifter assembly 20 is schematic in nature. It is to be appreciated that the configuration of the first and second channels 26, 34 and their engagement with the first and second detent pins 30, 40 are not schematic and are particularly designed to ensure selective retention of the shift lever 28 relative to the housing 22, which will be better understood through the description of the operation of the shift lever 28 below.

The operation of moving the shift lever 28 from the first lever position to the second lever position and from the second lever position to the first lever position by way of moving the locking member 36 between the first and second positions is described below and shown in Figures 2-5. As shown in Figure 3, when the shift lever 28 is in the first lever position and the first detent pin 30 is in the locked position, the locking member 36 may be in the first position such that the portion 38 (i.e., the first section 72 when present) aligns with the first detent pin 30 and retains the first detent pin 30 in the locked position and the shift lever 28 in the first lever position. When the secondary park channel 70 is present, the second detent pin 40 may be disposed therein, engaging the second detent track 32 and further retaining the shift lever 28 in the first lever position.

To move the shift lever 28 from the first lever position to the second lever position, the locking member 36 moves to the second position, as shown in Figure 4. Movement of the locking member 36 may be initiated by way of the user operating a brake pedal, a switch, or the like. Alternatively, the movement of the locking member 36 may be determined by a computer. In the Figures, the movement of the locking member 36 is shown as pivoting in a counter-clockwise direction. It is to be appreciated that movement of the locking member 36 may be pivoting in a clockwise direction or any other suitable movement. The portion 38 of the locking member 36 spaces from the first detent pin 30. When present, the second detent pin 40 moves out of the secondary park channel 70 and into the elongated void 66. The movement of the second detent pin 40 relative to the second detent track 32 may be further defined as movement between opposing sides of the elongated void 66 (i.e., the one side of the elongated void 66 with the second channel 34 and the other side of the elongated void 66 having the secondary park channel 70).

The user moves the shift lever 28 from the first lever position toward the second lever position. The second detent track 32 may have a transition ramp 82 which the second pin may ride along toward the second channel 34. When the shift lever 28 reaches the second lever position and the second detent pin 40 reaches the second channel 34, the second detent pin 40 may enter the second channel 34 to be retained in the second channel 34 until the locking member 36 is moved from the second position to the first position, as shown in Figure 5. Alternatively, the shifter assembly 20 may include a position sensor to detect the position of the shift lever 28. The position sensor may detect the shift lever 28 moving away from the first lever position. The position sensor may then facilitate movement of the locking member 36 from the second position to the first position, which prevents the second detent pin 40 from entering the second channel 34 and being retained in the second channel 34 and allows free movement the shift lever 28 from a shift lever position corresponding with the Park state of the transmission to a shift lever position corresponding with the Drive state of the transmission. Furthermore, if the movement of the shift lever 28 from the shift lever position corresponding with the Park state to the shift lever position corresponding with the Drive state is too rapid to facilitate independent movement of the locking member 36 from the second position to the first position, the second detent pin 40 will engage the transition ramp 82, which moves the locking member 36 from the second position to the first position

To move the shift lever 28 from the second lever position to the first lever position, the locking member 36 moves to the first position. Movement of the locking member 36 may be initiated by way of the user operating a brake pedal, a switch, or the like. The second detent pin 40 is removed from the second channel 34. With the first detent pin 30 in the locked position, the user then moves the first detent pin 30 from the locked position to the unlocked position and moves the shift lever 28 toward the first lever position. With the locking member 36 in the first position, the portion 38 of the locking member 36 (i.e., the first section 72) contacts the first detent pin 30. The locking member 36 is pushed by the first detent pin 30 to the second position (shown in Figure 4), allowing the first detent pin 30 to align with the first channel 26. The user moves the first detent pin 30 from the unlocked position to the locked position in the first channel 26, as shown in Figure 3. The locking member 36 returns to the first position. The first detent pin 30 is retained in the first channel 26 and the shift lever 28 is retained in the first lever position.

As shown in Figure 8, the locking member 36 may be movable to a third position spacing the locking member 36 from the first detent pin 30 and the first channel 26 in the first lever position and spacing the second detent pin 40 from the second channel 34 in the second lever position facilitating free movement of the shift lever 28 between the first and second lever positions. Specifically, the third position is illustrated in the embodiment shown in Figures 6-9. It is to be appreciated that the embodiment shown in Figures 2-5, as well as other embodiments not specifically described herein, may be configured such that the locking member 36 is movable to the third position. It is to be further appreciated that the embodiment shown in Figures 6-9 may be configured such that the third position is absent.

The operation of moving the shift lever 28 from the first lever position to the second lever position and from the second lever position to the first lever position by way of moving the locking member 36 between the first, second, and third positions is described below and shown in Figures 6-9. As shown in Figure 7, when the shift lever 28 is in the first lever position and the first detent pin 30 is in the locked position, the locking member 36 may be in the first position such that the portion 38 (i.e., the first section 72 when present) aligns with the first detent pin 30 and retains the first detent pin 30 in the locked position and the shift lever 28 in the first lever position. When the elongated void 66 is present, the second detent pin 40 may be disposed within the elongated void 66.

To move the shift lever 28 from the first lever position to the second lever position, the locking member 36 moves to the third position, shown in Figure 8. Movement of the locking member 36 may be initiated by way of the user operating a brake pedal, a switch, or the like. In the Figures, the movement of the locking member 36 is shown as pivoting in a counter-clockwise direction to the third position. It is to be appreciated that movement of the locking member 36 may be pivoting in a clockwise direction or any other suitable movement. The portion 38 of the locking member 36 spaces from the first detent pin 30. The user moves the first detent pin 30 from the locked position to the unlocked position. When present, the second detent pin 40 moves within the elongated void 66 further away from the second channel 34 (and the secondary park channel 70 when present). As such, the third position of the locking member 36 allows free movement of the shift lever 28 between the first and second lever positions (and any other lever positions when present) without the need for further movement of the locking member 36 to allow the shift lever 28 to move into the first lever position.

To retain the shift lever 28 in the second lever position, the user moves the shift lever 28 from the first lever position toward the second lever position. When the shift lever 28 reaches the second lever position and the second detent pin 40 reaches the second channel 34, the locking member 36 moves from the third position to the second position, which moves the second detent pin 40 into the second channel 34, as shown in Figure 9. In the Figures, the movement of the locking member 36 is shown as pivoting in a clockwise direction beyond the first position to the second position. The second detent pin 40 is retained in the second channel 34 until the locking member 36 is moved from the second position to the first position.

To move the shift lever 28 from the second lever position to the first lever position, the user moves the first detent pin 30 from the locked position to the unlocked position and moves the shift lever 28 toward the first lever position. The portion 38 of the locking member 36 is moved toward the third position (shown in Figure 8), allowing the first detent pin 30 to align with the first channel 26. The user moves the first detent pin 30 from the unlocked position to the locked position, as shown in Figure 8, allowing the first detent pin 30 to enter the first channel 26. The locking member 36 also returns to the first position, as shown in Figure 7. The first detent pin 30 is retained in the first channel 26 and the shift lever 28 is retained in the first lever position. The invention further provides for a method of selectively preventing movement from each of at least two states of the transmission for the vehicle using the shifter assembly 20. The shifter assembly 20 includes the housing 22 having the first detent track 24 defining at least the first channel 26, the shift lever 28 coupled to and movable relative to the housing 22, the first detent pin 30 coupled to and selectively moveable relative to the shift lever 28, the second detent track 32 coupled to and movable with the shift lever 28 with the track defining the second channel 34, and the locking member 36 coupled to and moveable relative to the housing 22 and having the second detent pin 40. The method includes the steps of disposing the first detent pin 30 in the first channel 26 when the first detent pin 30 is in the locked position and the shift lever 28 is in the first lever position for selecting one of the at least two states of the transmission and aligning the portion 38 of the locking member 36 with the first detent pin 30 when the locking member 36 is in the first position to retain the first detent pin 30 in the locked position within the first channel 26 and retain the shift lever 28 in the first lever position, as shown in Figures 3 and 7.

The method further includes the steps of moving the locking member 36 from the first position to the second position (as shown in Figures 4, 5, and 9) to space the portion 38 of the locking member 36 from the first channel 26 and moving the first detent pin 30 from the locked position to the unlocked position outside of the first channel 26.

The method further includes the steps of moving the shift lever 28 and the second detent track 32 from the first lever position to the second lever position (as shown in Figures 5 and 9) for selecting the other one of the at least two states of the transmission and disposing the second detent pin 40 of the locking member 36 in the second channel 34 to retain the shift lever 28 in the second lever position. The steps described above are usually performed sequentially; however, it is to be appreciated that the steps may be performed in any suitable order.

The step of moving the shift lever 28 and the second detent track 32 may be further defined as pivoting the shift lever 28 and concurrently moving the second detent track 32. Likewise, the step of moving the locking member 36 may be further defined as pivoting the locking member 36.

The shift lever 28 may extend along the longitudinal axis A. As such, the step of moving the first detent pin 30 may be further defined as translating the first detent pin 30 along the longitudinal axis A. The step of moving the locking member 36 from the first position to the second position may be further defined as the steps of moving locking member 36 from the first position to the third position (as shown in Figure 8) and moving the locking member 36 from the third position to the second position.

Accordingly, the subject invention provides the advantage of selectively retaining the shift lever 28 in the first and second lever positions corresponding with the two states of the transmission through a unitary component (i.e., the locking member 36). The use of the locking member 36 reduces the number of moving components required to retain the shift lever 28 in the first and second lever positions which reduces the complexity of the shifter assembly 20 and reduces the cost to produce the shifter assembly 20.

## Claims

1. A shifter assembly (20) for selecting one of at least two states of a transmission for a vehicle, said assembly comprising:
a housing (22) having a first detent track (24) defining at least a first channel (25);
a shift lever (28) coupled to and movable relative to said housing (22) between at least a first lever position and a second lever position spaced from said first lever position for selecting each of the at least two states of the transmission;
a first detent pin (30) coupled to and selectively moveable relative to said shift lever (28) between a locked position and an unlocked position with said first detent pin (30) disposed within said first channel (26) when said shift lever (28) is in said first lever position and said first detent pin (30) is in said locked position and said first detent pin spaced from said first channel (26) when said first detent pin (30) is in said unlocked position to permit movement of said shift lever (28) between said first and second lever positions; and
a locking member (36) coupled to and moveable relative to said housing (22) between a first position and a second position with a portion (38) of said locking member (36) aligned with said first detent pin (30) when said shift lever (28) is in said first lever position, said first detent pin (30) is in said locked position, and said locking member (36) is in said first position to retain said first detent pin (30) in said locked position within said first channel (26) and retain said shift lever (28) in said first lever position;
**characterized in that** the shifter assembly (20) further comprises a second detent track (32) coupled to and movable with said shift lever (28) between said first and second lever positions with said second detent track (32) defining a second channel (34);
wherein said locking member (36) has a second detent pin (40) disposed within said second channel (34) when said shift lever (28) is in said second lever position and said locking member (36) is in said second position to retain said shift lever (28) in said second lever position.

2. The shifter assembly (20) as set forth in claim 1, wherein said second detent pin (40) is spaced from said second channel (34) when said first detent pin (30) is in said first channel (26) and/or wherein said portion (38) of said locking member (36) is spaced from said first channel (26) when said second detent (40) is in said second channel (34) and/or wherein said locking member (36) has a first section (72) and a second section (74) transverse to said first section (72), with said second section (74) having said second detent pin (40) and with said first section (72) having said portion (38) alignable with said first detent pin (30).

3. The shifter assembly as set forth in claim 2, wherein said first and second sections (72, 74) both have elongated configurations and extend to distal ends.

4. The shifter assembly as set forth in claim 3, wherein said first section (72) of said locking member (36) aligns longitudinally with said first detent pin (30) such that said distal end of said first section (72) faces said first detent pin (30) when said shift lever (28) is in said first lever position, said first detent pin (30) is in said locked position, and said locking member (36) is in said first position and/or wherein said distal end of said second section (74) is spaced from said second channel (34) when said shift lever (28) is in said first lever position, said first detent pin (30) is in said locked position, and said locking member (36) is in said first position and/or wherein said second detent pin (40) extends from said distal end of said second section (74) transverse to said second section and is disposed within said second channel (34) when said shift lever (28) is in said second lever position and said locking member (36) is in said second position and/or wherein each of said first and second sections (72, 74) are integrally fixed to one another such that said first and second sections (72, 74) move as a unit.

5. The shifter assembly as set forth in claim 4, wherein said locking member (36) has a third section (78) integrally fixed with said first and second sections (72, 74) and receiving an input to move said locking member (36) and/or wherein said locking member (36) has a corner with said first and second sections (72, 74) extending from said corner to said distal ends and with said locking member (36) pivotally coupled to said housing at said corner such that said movement of said locking member (36) is further defined as pivoting of said locking member (36).

6. The shifter assembly as set forth in claim 5, wherein said shift lever (28) is pivotally coupled to said housing (22) with said shift lever (28) pivoting between said first and second lever positions and with said shift lever (28) and said locking member (36) pivoting about axes substantially parallel to one another.

7. The shifter assembly (20) as set forth in any one of the preceding claims further including an actuator (80) coupled to said locking member (36), with said actuator (80) effectuating said movement of said locking member (36) between said first and second positions.

8. The shifter assembly (20) as set forth in claim 7, wherein said shift lever and said locking member move independently of each other.

9. The shifter assembly (20) as set forth in any one of the preceding claims, wherein said first detent track (24) has a pair of first channel walls (54) spaced from one another and at least partially defining said first channel (26), with said first channel walls (54) transverse to said movement of said shift lever to retain said first detent pin (30) in said first channel (26).

10. The shifter assembly (20) as set forth in any one of the preceding claims, wherein said second detent track (32) has a pair of second channel walls (68) spaced from one another and at least partially defining said second channel (34), with said second channel walls (68) transverse to said movement of said shift lever (28) to retain said second detent pin (40) of said locking member (36) within said second channel (34) and/or wherein said shift lever (28) is pivotally coupled to said housing (22) with said shift lever (28) pivoting between said first and second lever positions and/or wherein said locking member (36) is movable to a third position spacing said locking member (36) from said first detent pin (30) and said first channel (26) in said first lever position and spacing said
second detent pin (40) from said second channel (34) in said second lever position facilitating free movement of said shift lever (28) between said first and second lever positions and/or wherein said shift lever (28) is spaced from said locking member (36) with said shift lever (28) and said locking member (36) moving in substantially parallel planes.

11. A method of selectively preventing movement from each of at least two states of a transmission for a vehicle using a shifter assembly, with the shifter assembly (20) including a housing (22) having a first detent track (24) defining at least a first channel (26), a shift lever (28) coupled to and movable relative to the housing, a first detent pin (30) coupled to and selectively moveable relative to the shift lever (28), a second detent track (32) coupled to and movable with the shift lever (28) with the second detent track (32) defining a second channel (34), and a locking member (36) coupled to and moveable relative to the housing (22) and having a second detent pin (40); said method comprising the steps of:
disposing the first detent pin (30) in the first channel (26) when the first detent pin (30) is in a locked position and the shift lever is in a first lever position for selecting one of the at least two states of the transmission;
aligning a portion (38) of the locking member (36) with the first detent pin (30) when the locking member (36) is in a first position to retain the first detent pin (30) in the locked position within the first channel (26) and retain the shift lever (28) in the first lever position;
moving the locking member (36) from the first position to a second position to space the portion (38) of the locking member (36) from the first channel (26);
moving the first detent pin (30) from the locked position to an unlocked position outside of the first channel (26);
moving the shift lever (28) and the second detent track (32) from the first lever position to a second lever position for selecting the other one of the at least two states of the transmission; and
disposing the second detent pin (40) of the locking member (36) in the second channel (34) to retain the shift lever (28) in the second lever position.

12. The method as set forth in claim 11, wherein the step of moving the shift lever (28) and the second detent track (32) is further defined as pivoting the shift lever (28) and concurrently moving the second detent track (32).

13. The method as set forth in claim 11, wherein the step of moving the locking member (36) is further defined as pivoting the locking member (36).

14. The method as set forth in claim 11, wherein the shift lever (28) extends along a longitudinal axis (A) with the step of moving the first detent pin (30) is further defined as translating the first detent pin (30) along the longitudinal axis (A).

15. The method as set forth in claim 11, wherein the step of moving the locking member (36) from the first position to the second position is further defined as the steps of moving locking member from the first position to a third position and moving the locking member (36) from the third position to the second position.

## Patentansprüche

1. Schaltaufbau (20) zum Auswählen einer von wenigstens zwei Stufen eines Getriebes eines Fahrzeugs, wobei der Aufbau aufweist:
ein Gehäuse (22) mit einer ersten Einrastbahn (24), die wenigstens einen ersten Kanal (25) definiert,
einen Schalthebel (28), der in dem Gehäuse (22) gelagert und dazu relativ zwischen wenigstens einer ersten Hebelstellung und einer zweiten Hebelstellung, die auf Abstand zu der ersten Hebelstellung liegt, beweglich ist, um jede der wenigstens zwei Stufen des Getriebes auszuwählen,
einen ersten Einraststift (30), der gekoppelt ist mit und selektiv beweglich ist relativ zu dem Schalthebel (28) zwischen einer verriegelten Stellung und einer entriegelten Stellung, wobei der erste Einraststift (30) in dem ersten Kanal (26) liegt, wenn der Schalthebel (28) in der ersten Hebelstellung ist und der erste Einraststift (30) in der verriegelten Stellung ist, und wobei der erste Einraststift auf Abstand zu dem ersten Kanal (26) ist, wenn der erste Einraststift (30) in der entriegelten Stellung ist, um Bewegung des Schalthebels (28) zwischen den ersten und zweiten Hebelstellungen zu ermöglichen, und
ein Riegelteil (36), das mit dem Gehäuse (22) gekoppelt ist und dazu relativ zwischen einer ersten Stellung und einer zweiten Stellung beweglich ist, wobei ein Bereich (38) des Riegelteils (36) zu dem ersten Einraststift (30) ausgerichtet ist, wenn der Schalthebel (38) in der ersten Hebelstellung ist, der erste Einraststift (30) in der verriegelten Stellung ist und das Riegelteil (36) in der ersten Stellung ist, um den ersten Einraststift (30) in der verriegelten Stellung innerhalb des ersten Kanals (26) festzuhalten und um den Schalthebel (28) in der ersten Hebelstellung festzuhalten,
**dadurch gekennzeichnet, dass** der Schaltaufbau (20) ferner eine zweite Einrastbahn (32) aufweist, die mit dem Schalthebel (28) gekoppelt und mit diesem zwischen der ersten Hebelstellung und der zweiten Hebelstellung beweglich ist, wobei die zweite Einrastbahn (32) einen zweiten Kanal (34) definiert,
wobei das Riegelteil (36) einen zweiten Einraststift (40) hat, der in dem zweiten Kanal (34) liegt, wenn der Schalthebel (28) in der zweiten Hebelstellung ist und das Riegelteil (36) in der zweiten Stellung ist, um den Schalthebel (28) in der zweiten Hebelstellung festzuhalten.

2. Schaltaufbau (20) nach Anspruch 1, wobei der zweite Einraststift (40) auf Abstand zu dem zweiten Kanal (34) ist, wenn der erste Einraststift (30) in dem ersten Kanal (26) liegt, und/oder wobei der Bereich (38) des Riegelteils (36) sich auf Abstand zu dem ersten Kanal (26) befindet, wenn der zweite Einraststift (40) sich in den zweiten Kanal (34) befindet, und/oder wobei das Riegelteil (36) einen ersten Abschnitt (72) und einen zweiten Abschnitt (74) quer zu dem ersten Abschnitt (72) hat, wobei der zweite Abschnitt (74) den zweiten Einraststift (40) enthält und wobei der erste Abschnitt (72) den mit dem ersten Einraststift (30) ausrichtbaren Bereich (38) aufweist.

3. Schaltaufbau nach Anspruch 2, wobei die ersten und zweiten Abschnitte (72, 74) beide längs ausgedehnte Gestaltungen haben und bis zu entfernten Enden verlaufen.

4. Schaltaufbau nach Anspruch 3, wobei der erste Abschnitt (72) des Riegelteils (36) in Längsrichtung zu dem ersten Einraststift (30) ausgerichtet ist, so dass das distale Ende des ersten Abschnitts (72) dem ersten Einraststift (30) zugewandt ist, wenn der Schalthebel (28) in der ersten Hebelstellung ist, der erste Einraststift (30) in der verriegelten Stellung ist und das Riegelteil (36) in der ersten Stellung ist, und/oder wobei das distale Ende des zweiten Abschnitts (74) auf Abstand zu dem zweiten Kanal (34) ist, wenn der Schalthebel (28) in der ersten Hebelstellung ist, der erste Einraststift (30) in der verriegelten Stellung ist und das Riegelteil (36) in der ersten Stellung ist, und/oder wobei der zweite Einraststift (40) von dem distalen Ende des zweiten Abschnitts (74) quer zu dem zweiten Abschnitt absteht und innerhalb des zweiten Kanals (34) liegt, wenn der Schalthebel (28) in der zweiten Hebelstellung ist und das Riegelteil (36) in der zweiten Stellung ist, und/oder wobei die ersten und zweiten Abschnitte (72, 74) integral miteinander verbunden sind, so dass die ersten und zweiten Abschnitte (72, 74) sich als eine Einheit bewegen.

5. Schaltaufbau nach Anspruch 4, wobei das Riegelteil (36) einen dritten Abschnitt (78) hat, der integral an den ersten und zweiten Abschnitten (72, 74) fixiert ist und eine Kraftzufuhr aufnimmt, um das Riegelteil (36) zu bewegen, und/oder das Riegelteil (36) eine Ecke hat, wobei die ersten und zweiten Abschnitte (72, 74) von der Ecke zu den distalen Enden verlaufen und wobei das Riegelteil (36) an der Ecke schwenkbar mit dem Gehäuse verbunden ist, so dass die Bewegung des Riegelteils (36) weiter als Schwenken des Riegelteils (36) definiert ist.

6. Schaltaufbau nach Anspruch 5, wobei der Schalthebel (28) schwenkbar mit dem Gehäuse (22) gekoppelt ist, wobei der Schalthebel (28) zwischen den ersten und zweiten Hebelstellungen schwenkt und wobei der Schalthebel (28) und das Riegelteil (36) um Achsen schwenken, die im wesentlichen parallel zueinander sind.

7. Schaltaufbau (20) nach einem der vorhergehenden Ansprüche, weiterhin mit einem Aktuator (80), der mit dem Riegelteil (36) verbunden ist, wobei der Aktuator (80) die Bewegung des Riegelteils (36) zwischen den ersten und zweiten Stellungen bewirkt.

8. Schaltaufbau (20) nach Anspruch 7, wobei der Schalthebel und das Riegelteil sich unabhängig voneinander bewegen.

9. Schaltaufbau (20) nach einem der vorhergehenden Ansprüche, wobei die erste Einrastbahn (24) ein Paar von ersten Kanalwänden (54) hat, die auf Abstand zueinander sind und den ersten Kanal (26) wenigstens teilweise definieren, wobei die ersten Kanalwände (54) quer zur Bewegung des Schalthebels stehen, um den ersten Einraststift (30) in dem ersten Kanal (26) festzuhalten.

10. Schaltaufbau (20) nach einem der vorhergehenden Ansprüche, wobei die zweite Einrastbahn (32) ein Paar von zweiten Kanalwänden (68) hat, die auf Abstand zueinander liegen und den zweiten Kanal (34) wenigstens teilweise definieren, wobei die zweiten Kanalwände (68) quer zu der Bewegung des Schalthebels (28) verlaufen, um den zweiten Einraststift (40) des Riegelteils (36) innerhalb des zweiten Kanals (34) festzuhalten, und/oder wobei der Schalthebel (28) schwenkbar in dem Gehäuse (22) gelagert ist, wobei der Schalthebel (28) zwischen den ersten und zweiten Hebelstellungen schwenkt und/oder wobei das Riegelteil (36) in eine dritte Stellung beweglich ist, in der das Riegelteil (36) von dem ersten Einraststift (30) und von dem ersten Kanal (26) entfernt ist in der ersten Hebelstellung und in der der zweite Einraststift (40) aus dem zweiten Kanal (34) in der zweiten Hebelstellung entfernt ist, was die freie Bewegung des Schalthebels (28) zwischen den ersten und zweiten Hebelstellungen ermöglicht, und/oder wobei der Schalthebel (28) auf Abstand zu dem Riegelteil (36) ist, wobei der Schalthebel (28) und das Riegelteil (36) sich in im wesentlichen parallelen Ebenen bewegen.

11. Verfahren zum gezielten Verhindern von Bewegung aus wenigstens zwei Stufen eines Getriebes für ein Fahrzeug unter Verwendung eines Schaltaufbaus, wobei der Schaltaufbau (20) ein Gehäuse (22), das eine erste Einrastbahn (24) hat, die wenigstens einen ersten Kanal (26) definiert, einen Schalthebel (28), der gelagert ist in und beweglich ist relativ zu dem Gehäuse, einen ersten Einraststift (30), der gekoppelt ist mit und selektiv beweglich ist relativ zu dem Schalthebel (28), eine zweite Einrastbahn (32), die gekoppelt ist mit und beweglich ist mit dem Schalthebel (28), wobei die zweite Einrastbahn (32) einen zweiten Kanal (34) definiert, und ein Riegelteil (36) aufweist, das gekoppelt ist mit und beweglich relativ zu dem Gehäuse (22) ist und einen zweiten Einraststift (40) aufweist, wobei das Verfahren die Schritte aufweist:
Positionieren des ersten Einraststiftes (30) in dem ersten Kanal (26), wenn der erste Einraststift (30) in einer verriegelten Stellung ist und der Schalthebel in einer ersten Hebelstellung zur Auswahl einer von wenigstens zwei Stufen des Getriebes ist,
Ausrichten eines Bereichs (38) des Riegelteils (36) mit dem ersten Einraststift (30), wenn das Riegelteil (36) in einer ersten Stellung ist, um den ersten Einraststift (30) in der verriegelten Stellung innerhalb des ersten Kanals (26) festzuhalten und den Schalthebel in der ersten Hebelstellung festzuhalten,
Bewegen des Riegelteils (36) aus der ersten Stellung in eine zweite Stellung, um den Bereich (38) des Riegelteils (36) von dem ersten Kanal (26) zu entfernen,
Bewegen des ersten Einraststiftes (30) aus der verriegelten Stellung in eine unverriegelte Stellung außerhalb des ersten Kanals (26),
Bewegen des Schalthebels (28) und der zweiten Einrastbahn (32) aus der ersten Hebelstellung in eine zweite Hebelstellung, um die andere von den wenigstens zwei Stufen des Getriebes auszuwählen, und
Positionieren des zweiten Einraststiftes (40) des Riegelteils (36) in dem zweiten Kanal (34), um den Schalthebel (28) in der zweiten Hebelstellung festzuhalten.

12. Verfahren nach Anspruch 11, wobei der Schritt des Bewegens des Schalthebels (28) und der zweiten Einrastbahn (32) weiter definiert ist als Schwenken des Schalthebels (28) und gleichzeitiges Bewegen der zweiten Einrastbahn (32) .

13. Verfahren nach Anspruch 11, wobei der Schritt des Bewegens des Riegelteils (36) weiter definiert ist als Schwenken des Riegelteils (36).

14. Verfahren nach Anspruch 11, wobei der Schalthebel (28) sich entlang einer Längsachse (A) erstreckt, wobei der Schritt des Bewegens des ersten Einraststiftes (30) weiter definiert ist als Verschieben des ersten Einraststiftes (30) entlang der Längsachse (A).

15. Verfahren nach Anspruch 11, wobei der Schritt des Bewegens des Riegelteils (36) aus der ersten Stellung in die zweite Stellung weiter definiert ist als die Schritte des Bewegens des Riegelteils aus der ersten Stellung in eine dritte Stellung und Bewegen des Riegelteils (36) aus der dritten Stellung in die zweite Stellung.

## Revendications

1. Ensemble de changement de vitesse (20) pour sélectionner un d'au moins deux états d'une transmission pour un véhicule, ledit ensemble comprenant :
un logement (22) ayant une première piste de détente (24) définissant au moins un premier canal (25) ;
un levier de changement de vitesse (28) couplé audit logement (22) et mobile par rapport à celui-ci entre au moins une première position de levier et une deuxième position de levier écartée de ladite première position de levier pour sélectionner chacun des au moins deux états de la transmission ;
une première goupille de détente (30) couplée audit levier de changement de vitesse (28) et mobile sélectivement par rapport à celui-ci entre une position verrouillée et une position déverrouillée, ladite première goupille de détente (30) étant disposée à l'intérieur dudit premier canal (26) lorsque ledit levier de changement de vitesse (28) est dans ladite première position de levier et que ladite première goupille de détente (30) est dans ladite position verrouillée et ladite première goupille de détente étant écartée dudit premier canal (26) lorsque ladite première goupille de détente (30) est dans ladite position déverrouillée pour permettre un mouvement dudit levier de changement de vitesse (28) entre lesdites première et deuxième positions de levier ; et
un élément de verrouillage (36) couplé audit logement (22) et mobile par rapport à celui-ci entre une première position et une deuxième position, une partie (38) dudit élément de verrouillage (36) étant alignée avec ladite première goupille de détente (30) lorsque ledit levier de changement de vitesse (28) est dans ladite première position de levier, que ladite première goupille de détente (30) est dans ladite position verrouillée, et que ledit élément de verrouillage (36) est dans ladite première position pour retenir ladite première goupille de détente (30) dans ladite position verrouillée à l'intérieur dudit premier canal (26) et retenir ledit levier de changement de vitesse (28) dans ladite première position de levier ;
**caractérisé en ce que** l'ensemble de changement de vitesse (20) comprend en outre une seconde piste de détente (32) couplée audit levier de changement de vitesse (28) et mobile avec celui-ci entre lesdites première et deuxième positions de levier avec ladite seconde piste de détente (32) définissant un second canal (34) ;
dans lequel ledit élément de verrouillage (36) présente une goupille de détente (40) disposée à l'intérieur dudit second canal (34) lorsque ledit levier de changement de vitesse (28) est dans ladite deuxième position de levier et que ledit élément de verrouillage (36) est dans ladite deuxième position pour retenir ledit levier de changement de vitesse (28) dans ladite deuxième position de levier.

2. Ensemble de changement de vitesse (20) selon la revendication 1, dans lequel ladite seconde goupille de détente (40) est écartée dudit second canal (34) lorsque ladite première goupille de détente (30) est dans ledit premier canal (26) et/ou dans lequel ladite partie (38) dudit élément de verrouillage (36) est écartée dudit premier canal (26) lorsque ladite seconde goupille de détente (40) est dans ledit second canal (34) et/ou dans lequel ledit élément de verrouillage (36) présente une première section (72) et une seconde section (74) transversale à ladite première section (72), ladite seconde section (74) présentant ladite seconde goupille de détente (40) et ladite première section (72) présentant ladite partie (38) alignable avec ladite première goupille de détente (30).

3. Ensemble de changement de vitesse selon la revendication 2, dans lequel lesdites première et seconde sections (72, 74) ont toutes deux des configurations allongées et s'étendent vers des extrémités distales.

4. Ensemble de changement de vitesse selon la revendication 3, dans lequel ladite première section (72) dudit élément de verrouillage (36) s'aligne longitudinalement avec ladite première goupille de détente (30) de telle sorte que ladite extrémité distale de ladite première section (72) fait face à ladite première goupille de détente (30) lorsque ledit levier de changement de vitesse (28) est dans ladite première position de levier, que ladite première goupille de détente (30) est dans ladite position verrouillée, et que ledit élément de verrouillage (36) est dans ladite première position et/ou dans lequel ladite extrémité distale de ladite seconde section (74) est écartée dudit second canal (34) lorsque ledit levier de changement de vitesse (28) est dans ladite première position de levier, que ladite première goupille de détente (30) est dans ladite position verrouillée, et que ledit élément de verrouillage (36) est dans ladite première position et/ou dans lequel ladite seconde goupille de détente (40) s'étend à partir de ladite extrémité distale de ladite seconde section (74) transversalement à ladite seconde section et est disposée à l'intérieur dudit second canal (34) lorsque ledit levier de changement de vitesse (28) est dans ladite deuxième position de levier et que ledit élément de verrouillage (36) est dans ladite deuxième position et/ou dans lequel chacune desdites première et seconde sections (72, 74) est fixée d'un seul tenant à l'autre de telle sorte que lesdites première et seconde sections (72, 74) se déplacent en tant qu'unité.

5. Ensemble de changement de vitesse selon la revendication 4, dans lequel ledit élément de verrouillage (36) a une troisième section (78) fixée d'un seul tenant avec lesdites première et deuxième sections (72, 74) et recevant une entrée pour déplacer ledit élément de verrouillage (36) et/ou dans lequel ledit élément de verrouillage (36) présente un angle avec lesdites première et seconde sections (72, 74) s'étendant à partir dudit angle vers lesdites extrémités distales et avec l'élément de verrouillage (36) couplé de manière pivotante audit logement au niveau dudit angle de telle sorte que ledit mouvement dudit élément de verrouillage (36) est défini en outre comme un pivotement dudit élément de verrouillage (36).

6. Ensemble de changement de vitesse selon la revendication 5, dans lequel ledit levier de changement de vitesse (28) est couplé de manière pivotante audit logement (22), ledit levier de changement de vitesse (28) pivotant entre lesdites première et deuxième positions de levier et ledit levier de changement de vitesse (28) et ledit élément de verrouillage (36) pivotant autour d'axes sensiblement parallèles l'un à l'autre.

7. Ensemble de changement de vitesse (20) selon l'une quelconque des revendications précédentes, comportant en outre un actionneur (80) couplé audit élément de verrouillage (36), ledit actionneur (80) effectuant ledit mouvement dudit élément de verrouillage (36) entre lesdites première et deuxième positions.

8. Ensemble de changement de vitesse (20) selon la revendication 7, dans lequel ledit levier de changement de vitesse et ledit élément de verrouillage se déplacent indépendamment l'un de l'autre.

9. Ensemble de changement de vitesse (20) selon l'une quelconque des revendications précédentes, dans lequel ladite première piste de détente (24) présente une paire de premières parois de canal (54) écartées l'une de l'autre et définissant au moins partiellement ledit premier canal (26), lesdites premières parois de canal (54) étant transversales audit mouvement dudit levier de changement de vitesse pour retenir ladite première goupille de détente (30) dans ledit premier canal (26).

10. Ensemble de changement de vitesse (20) selon l'une quelconque des revendications précédentes, dans lequel ladite seconde piste de détente (32) présente une paire de secondes parois de canal (68) écartées l'une de l'autre et définissant au moins partiellement ledit second canal (34), lesdites secondes parois de canal (68) étant transversales audit mouvement dudit levier de changement de vitesse (28) pour retenir ladite seconde goupille de détente (40) dudit élément de verrouillage (36) à l'intérieur dudit second canal (34) et/ou dans lequel ledit levier de changement de vitesse (28) est couplé de manière pivotante audit logement (22), ledit levier de changement de vitesse (28) pivotant entre lesdites première et deuxième positions de levier et/ou dans lequel ledit élément de verrouillage (36) est mobile vers une troisième position écartant ledit élément de verrouillage (36) de ladite première goupille de détente (30) et dudit premier canal (26) dans ladite première position de levier et écartant ladite seconde goupille de détente (40) dudit second canal (34) dans ladite deuxième position de levier, facilitant un mouvement libre dudit levier de changement de vitesse (28) entre lesdites première et deuxième positions de levier et/ou dans lequel ledit levier de changement de vitesse (28) est écarté dudit élément de verrouillage (36), ledit levier de changement de vitesse (28) et ledit élément de verrouillage (36) se déplaçant dans des plans sensiblement parallèles.

11. Procédé de prévention sélective d'un mouvement à partir de chacun d'au moins deux états d'une transmission pour un véhicule utilisant un ensemble de changement de vitesse, l'ensemble de changement de vitesse (20) comportant un logement (22) ayant un premier piste de détente (24) définissant au moins un premier canal (26), un levier de changement de vitesse (28) couplé audit logement et mobile par rapport à celui-ci, une première goupille de détente (30) couplée audit levier de changement de vitesse (28) et mobile sélectivement par rapport à celui-ci, une seconde piste de détente (32) couplée audit levier de changement de vitesse (28) et mobile avec celui-ci, avec la seconde piste de détente (32) définissant un second canal (34), et un élément de verrouillage (36) couplé au logement (22) et mobile par rapport à celui-ci et ayant une seconde goupille de détente (40) ; ledit procédé comprenant les étapes de :
disposition de la première goupille de détente (30) dans le premier canal (26) lorsque la première goupille de détente (30) est dans la position verrouillée et que le levier de changement de vitesse est dans la première position de levier pour sélectionner un des au moins deux états de transmission ;
alignement d'une partie (38) de l'élément de verrouillage (36) avec la première goupille de détente (30) lorsque 1"élément de verrouillage (36) est dans une première position pour retenir la première goupille de détente (30) dans la position verrouillée à l'intérieur du premier canal (26) et retenir le levier de changement de vitesse (28) dans la première position de levier :
déplacement de l'élément de verrouillage (36) de la première position à une deuxième position pour écarter la partie (38) de l'élément de verrouillage (36) du premier canal (26) ;
déplacement de la première goupille de détente (30) de la position verrouillée à la position déverrouillée à l'extérieur du premier canal (26) ;
déplacement du levier de changement de vitesse (28) et de la seconde piste de détente (32) de la première position de levier à une deuxième position de levier pour sélectionner l'autre des au moins deux états de la transmission ; et
disposition de la seconde goupille de détente (40) de l'élément de verrouillage (36) dans le second canal (34) pour retenir le levier de changement de vitesse (28) dans la deuxième position de levier.

12. Procédé selon la revendication 11, dans lequel l'étape de déplacement du levier de changement de vitesse (28) et de la seconde piste de détente (32) est en outre définie comme le pivotement du levier de changement de vitesse (28) et le déplacement en parallèle de la seconde piste de détente (32).

13. Procédé selon la revendication 11, dans lequel l'étape de déplacement de l'élément de verrouillage (36) est en outre définie comme le pivotement de l'élément de verrouillage (36).

14. Procédé selon la revendication 11, dans lequel le levier de changement de vitesse (28) s'étend le long d'un axe longitudinal (A) avec l'étape de déplacement de la première goupille de détente (30) définie en outre comme la translation de la première goupille de détente (30) le long de l'axe longitudinal (A).

15. Procédé selon la revendication 11, dans lequel l'étape de déplacement de l'élément de verrouillage (36) de la première position à la deuxième position est en outre définie comme les étapes de déplacement de l'élément de verrouillage de la première position à une troisième position et de déplacement de l'élément de verrouillage (36) de la troisième position à la deuxième position.
